# DEMANDE DE BREVET EUROPEEN

(11) **EP 1 133 204 A1**
(43) Date de publication de la demande: **12.09.2001**
(21) Numéro de dépôt: 01400582.1
(22) Date de dépôt: 06.03.2001
(51) Int. Cl.: H04Q 7/24

(54) **Réseau informatique comportant une pluralité de passerelles vers au moins un réseau téléphonique**

(30) Priorité: 08.03.2000 FR 0002966
(71) Demandeur: SAGEM SA, 75116 Paris (FR)
(72) Inventeur: N'Guyen van-Duong, Eric, 91140 Villebon sur Yvette (FR)
(74) Mandataire: Bloch, Gérard

(57) **Abrégé**

Les passerelles (1a-1d, 2a-2d, 3, 4) du réseau informatique convertissent des signaux en données informatiques et inversement. Chaque passerelle (1a-1d, 2a-2d, 3, 4) est territorialement opérationnelle pour une zone géographique donnée. Chaque passerelle (1a-1d, 2a-2d, 3, 4) comprend des moyens de liaison radio avec le réseau téléphonique (10, 20, 30, 40). Un serveur (6) gère une table (61) de localisation des terminaux du réseau de téléphonie radio (10, 20, 30, 40), contenant, pour chaque terminal, une indication sur la passerelle opérationnelle compte tenu de la position géographique du terminal.

## Description

Pour réduire le coût d'une communication téléphonique longue distance, par exemple internationale, il est connu de faire transiter la communication par un réseau informatique de transmission de données, par exemple un réseau IP (Internet Protocol) utilisant les protocoles Internet, par l'intermédiaire de passerelles entre les deux réseaux, téléphonique et informatique, celles-ci assurant la conversion des signaux téléphoniques en paquets de données et inversement. Comme exemples de réseau informatique de ce type, on peut citer l'Internet ou encore un réseau étendu WAN (Wide Area Network).

Le réseau IP comprend un parc de passerelles entre le réseau IP et un réseau téléphonique, ou un ensemble de réseaux téléphoniques interconnectés, et un centre de contrôle de ces passerelles.

L'établissement d'une communication, par exemple à travers l'Internet, entre deux terminaux téléphoniques fixes A (appelant) et B (appelé), reliés à un réseau téléphonique et respectivement situés dans deux zones géographiques tarifaires distinctes de ce réseau, se déroule de la façon suivante:
- le terminal A appelle une première passerelle, située dans sa zone géographique, et lui transmet une requête d'appel, contenant le numéro d'appel du terminal B,
- la première passerelle retransmet la requête d'appel vers le centre,
- sur reconnaissance des indicatifs pays et régionaux du numéro reçu, le centre transmet la requête d'appel du terminal B à une seconde passerelle, située dans la zone géographique du terminal B,
- sur réception de la requête, la seconde passerelle appelle le terminal B et
- après établissement de la communication entre la seconde passerelle et le terminal B, le centre met en communication les terminaux A et B à travers l'Internet, par l'intermédiaire des deux passerelles.

On remplace ainsi une communication téléphonique longue distance et, par conséquent, coûteuse par deux communications locales bon marché entre les terminaux et leurs passerelles.

Cette solution pour réduire le coût des communications téléphoniques est satisfaisante en téléphonie fixe, mais ne l'est pas en téléphonie radio, en raison de la mobilité du téléphone appelé.

La présente invention propose de pallier cet inconvénient.

A cet effet, l'invention concerne un réseau informatique de transmission de données comprenant une pluralité de passerelles entre le réseau informatique et au moins un réseau téléphonique, destinées à convertir des signaux téléphoniques en données informatiques et inversement, chaque passerelle étant territorialement opérationnelle pour une zone géographique donnée, caractérisé par le fait que, le réseau téléphonique étant un réseau de téléphonie radio, chaque passerelle comprend des moyens de liaison radio avec le réseau téléphonique et il est prévu un serveur, de gestion d'une table de localisation d'une pluralité de terminaux du réseau téléphonique, contenant, pour chaque terminal, une indication relative à la passerelle territorialement opérationnelle compte tenu de la position géographique de ce terminal, et un routeur d'appels, destiné à notifier une requête d'appel d'un terminal à la passerelle territorialement opérationnelle compte tenu de la position géographique dudit terminal.

Le serveur de gestion de la table de localisation permet de suivre les déplacements des terminaux téléphoniques d'une zone géographique dépendant d'une passerelle à une zone géographique dépendant d'une autre passerelle.

Avantageusement, il est prévu au moins une passerelle entre le réseau informatique et un réseau local de téléphonie radio.

De préférence, ladite passerelle entre le réseau local et le réseau informatique comprend un module de base téléphonique radio, à laquelle un terminal peut se relier directement par liaison radio.

Avantageusement encore, il est prévu au moins une passerelle entre le réseau informatique et un réseau téléphonique cellulaire.

De préférence, ladite passerelle comprend un module de téléphone cellulaire.

L'invention sera mieux comprise à l'aide de la description suivante d'une forme de réalisation particulière du réseau de l'invention, en référence au dessin annexé sur lequel:
- la figure 1 représente un schéma global du réseau,
- la figure 2 représente un schéma bloc fonctionnel d'une passerelle IP/GSM du réseau de la figure 1 et
- la figure 3 représente un schéma bloc fonctionnel d'une passerelle IP/DECT du réseau de la figure 1.

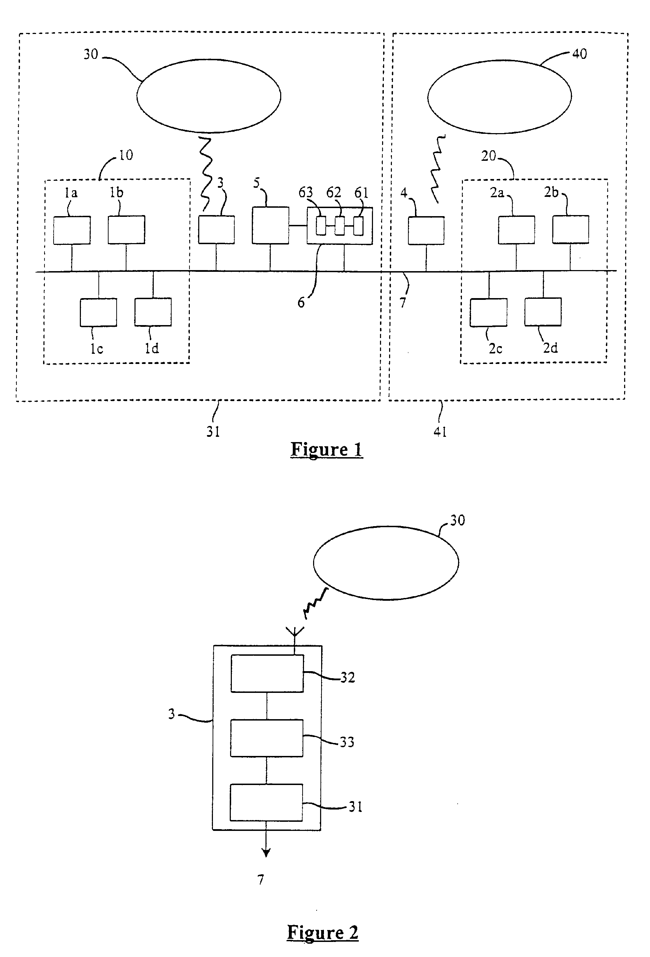

Le réseau informatique de transmission de données, représenté sur la figure 1, est un réseau IP, de commutation de paquets, utilisant les protocoles standards de l'Internet. Le réseau comprend un parc de passerelles entre le réseau IP et divers réseaux de radiocommunication, un routeur d'appels 5 et un serveur de mobilité 6, tous connectés à une artère centrale 7 à haut débit, ou "backbone". Chaque entité du réseau IP (passerelles, routeur 5 et serveur 6) a une adresse informatique, ou "adresse IP", sur le réseau IP.

Le parc de passerelles comprend
- un groupe de passerelles 1a-1d entre le réseau IP et un premier réseau local de téléphonie radio 10, en l'espèce un réseau DECT,
- un groupe de passerelles 2a-2d entre le réseau IP et un second réseau local DECT 20,
- une passerelle 3 entre le réseau IP et un premier réseau téléphonique cellulaire 30, ici GSM, et
- une passerelle 4 entre le réseau IP et un second réseau téléphonique GSM 40.

Dans l'exemple particulier de la description, les deux réseaux GSM 30, 40 couvrent respectivement deux régions distinctes 31 et 41, correspondant ici à deux territoires nationaux, et les réseaux locaux DECT 10 et 20 sont des réseaux d'entreprise, respectivement situés dans les régions 31 et 41.

Les passerelles ont pour fonction de convertir des signaux téléphoniques analogiques en paquets de données IP et inversement. Par l'intermédiaire de ces passerelles IP/GSM ou IP/DECT, des terminaux téléphoniques ordinaires, non dotés de capacités Internet, par exemple des téléphones GSM ou des combinés DECT, peuvent communiquer à travers le réseau IP.

Les passerelles IP/GSM 3 et 4 étant identiques, seule la passerelle 3, représentée sur la figure 2, va maintenant être décrite.

La passerelle 3 comprend une interface 31 de connexion au réseau IP, un module de téléphone cellulaire GSM 32 et un bloc de conversion 33, destiné à convertir les signaux téléphoniques radios GSM, signaux analogiques mais qui modulent des données numériques, en paquets de données IP et inversement. L'interface IP 31 et le module GSM 32 sont connectés l'un à l'autre, avec interposition du bloc de conversion 33.

Le module de téléphone cellulaire GSM 32 comprend les éléments classiques d'un téléphone GSM, à l'exclusion des éléments d'interface homme-machine. Ce module 32 permet à la passerelle 3 de se connecter au réseau cellulaire 30 (40) et de communiquer à travers celui-ci, comme un téléphone GSM ordinaire. Le module GSM 32 constitue ainsi une interface radio de liaison avec le réseau GSM 30.

La zone géographique, pour laquelle la passerelle IP/GSM 3 est territorialement opérationnelle, correspond à la région 31 couverte par le réseau GSM 30. En d'autres termes, tout terminal téléphonique GSM situé dans la région 31 peut communiquer à travers le réseau IP par l'intermédiaire de la passerelle 3, en payant le coût d'une communication locale.

La zone géographique, dans laquelle la passerelle IP/GSM 4 est territorialement opérationnelle, correspond à la région 41, couverte par le réseau GSM 40.

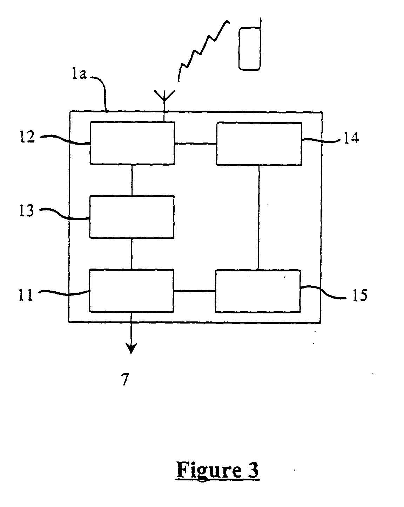

Toutes les passerelles IP/DECT 1a-1d et 2a-2d étant identiques, seule la passerelle la, représentée sur la figure 3, va maintenant être décrite.

La passerelle IP/DECT la comprend une interface 11 de connexion au réseau IP, un module de base DECT 12 et un bloc de conversion 13, destiné à convertir les signaux téléphoniques radios DECT, analogiques comme plus haut, en paquets de données IP et inversement. L'interface IP 11 et le module DECT 12 sont connectés l'un à l'autre, avec interposition d'un bloc de conversion 13.

Le module de base DECT 12 comprend les éléments classiques d'une base DECT, à l'exclusion des éléments d'interface homme-machine. Grâce à cela, des combinés DECT, situés dans la cellule de la passerelle la (c'est-à-dire dans la zone de couverture du module de base DECT 12) peuvent se relier, s'apparier, à la passerelle la directement par liaison radio. Le module 12 constitue ainsi une interface de liaison avec le réseau local DECT 10.

La passerelle la comprend en outre un bloc 14 de détection d'un combiné DECT dans sa cellule et un bloc 15 d'émission, vers le serveur de mobilité 6, de messages indiquant la présence d'un combiné DECT dans sa cellule ou la sortie d'un combiné DECT hors de sa cellule. Le bloc 14 est relié au module de base DECT 12 et au bloc d'émission 15, lui-même relié à l'interface IP 11.

La zone géographique, pour laquelle la passerelle 1a est territorialement opérationnelle, est la cellule topographique couverte par le module de base DECT 12. En d'autres termes, tout terminal téléphonique DECT, se trouvant dans la cellule de la passerelle la, peut communiquer à travers le réseau IP par l'intermédiaire de cette passerelle 1a.

Le serveur de mobilité 6 comprend une mémoire de stockage d'une table 61 de localisation d'un ensemble de terminaux téléphoniques, comprenant ici des téléphones GSM et des combinés DECT, un bloc 62 de gestion de cette table 61 et un bloc 63 de réception de données de localisation de terminaux de l'ensemble.

Un numéro d'appel téléphonique unique est attribué à chaque terminal téléphonique. La table 61 contient, pour chaque terminal de l'ensemble, un identifiant de ce terminal, ici son numéro d'appel, et, le cas échéant, une indication relative à la passerelle territorialement opérationnelle compte tenu de la position géographique du terminal, constituée ici par l'adresse IP de cette passerelle. Par exemple, si un combiné DECT est dans la cellule d'une passerelle IP/DECT, l'adresse IP de cette passerelle est associée au numéro d'appel du combiné DECT dans la table 61. De même, si un téléphone GSM est situé dans la région couverte par l'un des deux réseaux GSM, par exemple par le réseau 30, l'adresse IP de la passerelle 3, est associée au numéro d'appel du téléphone GSM dans la table 61.

Le bloc de réception 63 est agencé pour recevoir et pour interpréter des messages indiquant la présence d'un terminal de l'ensemble dans la zone géographique dépendant d'une passerelle donnée ou la sortie du terminal hors de cette zone, comme cela sera explicité plus loin.

Le bloc de gestion 62 est destiné à mettre à jour la table de localisation 61, en fonction des données de localisation reçues par le bloc 63.

Le routeur d'appels 5, connecté au serveur de mobilité 6, est destiné à notifier chaque requête d'appel d'un terminal A par un terminal B, au terminal A, et à mettre en communication les terminaux A et B à travers le réseau IP, comme cela sera explicité plus loin.

Lorsqu'un combiné DECT client pénètre dans la cellule d'une passerelle IP/DECT, par exemple dans celle de la passerelle la, il détecte des signaux de balise émis par le module de base DECT 12 de cette passerelle la, s'identifie auprès de celle-ci et s'apparie à elle, comme à une base DECT ordinaire. La passerelle IP/DECT la détecte ainsi la présence du combiné DECT dans sa cellule et envoie alors un message, indiquant la présence du combiné DECT dans sa cellule, au serveur de mobilité 6, à travers le réseau IP. Ce message contient le numéro d'appel du combiné DECT, fourni par le combiné à la passerelle, et un identifiant de la passerelle la, constitué ici par son adresse IP. Sur réception du message, le serveur 6 mémorise dans la table 61 l'adresse IP de la passerelle la en l'associant au numéro d'appel du combiné DECT considéré.

Lorsque le combiné DECT sort de la cellule de la passerelle la, celle-ci, ne détectant plus le combiné DECT, envoie au serveur de mobilité 6, à travers le réseau IP, un message indiquant la sortie du combiné DECT hors de sa cellule. Ce message contient également le numéro d'appel du combiné DECT et l'adresse IP de la passerelle la. Sur réception du message, le serveur 6 supprime de la table 61 l'adresse IP de la passerelle la, associée au numéro d'appel du combiné DECT considéré.

Le serveur 6 peut ainsi suivre le déplacement du combiné DECT d'une passerelle IP/DECT à une autre passerelle IP/DECT, même lorsque le combiné DECT est en cours de communication.

Chaque téléphone GSM appartient à un réseau GSM donné. Le numéro d'appel d'un téléphone GSM permet au serveur de mobilité 6 de déterminer la région associée à ce téléphone, c'est-à-dire la région du réseau GSM de ce téléphone. Par défaut, le serveur de mobilité 6 mémorise dans la table de localisation 61, pour chaque téléphone d'un réseau GSM donné, l'adresse IP de la passerelle opérationnelle pour la région couverte par ce réseau GSM.

Les numéros d'appel téléphonique des passerelles IP/GSM 3 et 4 sont préenregistrés dans les téléphones de l'ensemble. Ceux-ci sont agencés pour reconnaître la région dans laquelle ils se trouvent, à l'aide de données fournies par le réseau régional, et pour sélectionner la passerelle territorialement opérationnelle pour cette région. La passerelle sélectionnée est la passerelle active, à travers laquelle le téléphone est destiné à se connecter pour communiquer à travers le réseau IP.

Lorsqu'un téléphone du réseau GSM 30 est en déplacement (ou en "roaming") dans la région 41 couverte par l'autre réseau GSM 40, il change de réseau GSM et déclare sa présence dans la région 41 au serveur de mobilité 6, ici par l'envoi d'un message SMS, à travers un canal de signalisation du réseau GSM 40. Le message contient le numéro d'appel du téléphone considéré et l'indication selon laquelle il se trouve dans la région 41 du réseau GSM 40. Sur réception de ce message, le serveur 6 mémorise l'adresse IP de la passerelle 4, territorialement opérationnelle pour la région 41, en l'associant au numéro d'appel du téléphone GSM considéré, dans la table de localisation 61.

Lorsque le téléphone GSM revient dans sa région 31, il le signale au serveur 6, par l'envoi d'un message SMS. Le serveur 6 mémorise alors l'adresse IP de la passerelle 3 opérationnelle pour la région 31, à la place de l'adresse IP de la passerelle 4, associée au numéro d'appel du téléphone considéré dans la table de localisation 61.

L'établissement d'une communication téléphonique entre deux terminaux téléphoniques A (appelant) et B (appelé) va maintenant être décrite.

Dans un premier cas, les terminaux A et B sont des téléphones GSM, respectivement situés dans les régions 31 et 41.

Le téléphone A appelle la passerelle IP/GSM 3, territorialement opérationnelle pour la zone géographique 31 dans lequel il se trouve. Après établissement de la communication à travers le réseau GSM 30, le téléphone A transmet à la passerelle 3 une requête d'appel du téléphone B, contenant le numéro d'appel de celui-ci. La passerelle 3 retransmet la requête d'appel vers le routeur d'appels 5. Sur réception de la requête, celui-ci consulte la table 61 et en extrait l'adresse IP de la passerelle IP/GSM 4, territorialement opérationnelle vis-à-vis de la position géographique du téléphone B. Le routeur 5 notifie alors la requête d'appel à la passerelle 4. Celle-ci appelle alors le téléphone B à travers le réseau GSM 40. Après établissement de la communication entre la passerelle 4 et le téléphone B, le routeur 5 met en communication les deux téléphones A et B à travers le réseau IP, par l'intermédiaire des deux passerelles IP/GSM 3 et 4.

Dans un second cas, les terminaux A et B sont des combinés DECT, respectivement appariés à deux passerelles IP/DECT. L'établissement de la communication s'effectue comme explicité ci-dessus, à la différence près que la communication entre les combinés DECT A et B et leurs passerelles IP/DECT respectives s'effectue directement par liaison radio.

On pourrait également envisager de mettre en communication un combiné DECT et un téléphone GSM, à travers le réseau IP, par l'intermédiaire d'une passerelle IP/DECT et d'une passerelle IP/GSM.

Les téléphones GSM pourraient déclarer leur présence dans une région dépendant d'une passerelle donnée, autrement que par l'envoi d'un message SMS, par exemple par un appel téléphonique.

Le serveur de mobilité et le routeur d'appels pourraient être intégrés dans un même serveur.

Le réseau IP pourrait être relié à tout autre type de réseau de radiocommunication, par l'intermédiaire de passerelles appropriées.

## Revendications

1. Réseau informatique de transmission de données comprenant une pluralité de passerelles (1a-1d, 2a-2d, 3, 4) entre le réseau informatique et au moins un réseau téléphonique (10, 20, 30, 40), destinées à convertir des signaux téléphoniques en données informatiques et inversement, chaque passerelle (1a-1d, 2a-2d, 3, 4) étant territorialement opérationnelle pour une zone géographique donnée, **caractérisé par** le fait que, le réseau téléphonique externe (10, 20, 30, 40) étant un réseau de téléphonie radio, chaque passerelle (1a-1d, 2a-2d, 3, 4) comprend des moyens (12, 32) de liaison radio avec le réseau téléphonique (10, 20, 30, 40) et il est prévu un serveur (6), de gestion d'une table (61) de localisation d'une pluralité de terminaux du réseau de téléphonie radio (10, 20, 30, 40), contenant, pour chaque terminal, une indication relative à la passerelle territorialement opérationnelle compte tenu de la position géographique de ce terminal, et un routeur d'appels (5), destiné à notifier une requête d'appel d'un terminal à la passerelle territorialement opérationnelle compte tenu de la position géographique dudit terminal.

2. Réseau selon la revendication 1, dans lequel il est prévu au moins une passerelle entre le réseau informatique et un réseau local de téléphonie radio.

3. Réseau selon la revendication 2, dans lequel ladite passerelle (1a-1d, 2a-2d) entre le réseau informatique et le réseau local de téléphonie radio comprend un module de base téléphonique radio (12), à laquelle un terminal peut se relier directement par liaison radio.

4. Réseau selon l'une des revendications 1 à 3, dans lequel il est prévu au moins une passerelle (3, 4) entre le réseau informatique et un réseau téléphonique cellulaire (30, 40).

5. Réseau selon la revendication 4, dans lequel la passerelle (3, 4) entre le réseau informatique et le réseau cellulaire comprennent un module de téléphone cellulaire (32).

6. Réseau selon l'une des revendications 1 à 5, dans lequel le serveur (6) de gestion de la table de localisation (61) comprend des moyens (63) de réception de données de localisation des terminaux du réseau de radiocommunication.
